# EUROPEAN PATENT SPECIFICATION

(11) **EP 2 961 148 B1**
(45) Date of publication and mention of the grant of the patent: **10.05.2017**
(21) Application number: 15168635.9
(22) Date of filing: 21.05.2015
(51) Int. Cl.: H04M 3/493

(54) **METHOD AND DEVICE FOR OBTAINING VOICE SERVICE**
VERFAHREN UND VORRICHTUNG ZUR ERLANGUNG EINES SPRACHDIENSTES
PROCÉDÉ ET DISPOSITIF PERMETTANT D'OBTENIR UN SERVICE VOCAL

(30) Priority: 24.06.2014 CN 201410286323
(43) Date of publication of application: 30.12.2015
(73) Proprietor: Xiaomi Inc., Beijing 100085 (CN)
(72) Inventor: Wen, Zhenwei, 100085 Haidian District (CN); Peng, Tao, 100085 Haidian District (CN); Xu, Ruijun, 100085 Haidian District (CN)
(74) Representative: Sadler, Peter Frederick

(56) References cited:
- US-A1- 2009 154 666
- US-A1- 2013 022 181
- US-A1- 2014 134 979

## Description

### TECHNICAL FIELD

The present disclosure generally relates to the field of mobile communication, and more particularly, to a method and a device for obtaining a voice service.

### BACKGROUND

Currently, more and more companies select to use an automatic voice service system to provide services for users. For example, a mobile operator uses an automatic voice service system whose number is '1008x' to provide business query services for the users.

When a user needs to make a query using an automatic voice service system, he or she uses a terminal to dial the automatic voice service system, and then the automatic voice service system returns voice prompt information to the terminal according to a preset service process, the terminal receives and plays the voice prompt information, and receives a keyboard signal input by the user through a keyboard after the user listens to the voice prompt information. The terminal sends the received keyboard signal to the automatic voice service system, and receives next voice prompt information returned by the automatic voice service system or receives queried result information retuned by the automatic voice service system.

The inventor has appreciated that at least the following deficiencies are found in the prior art: usually the user cannot determine what kind of keyboard signal should be input at this time to continue the query until he or she listens to the whole voice prompt information, , which consumes a great deal of waiting time of the user. At the same time, for the terminal, it cannot response information input by the user according to the voice prompt information until after the whole voice prompt information is played, the above solution shortens battery service life of the terminal.

US2013/022181A1 provides a system for generating an interactive Voice Response (IVR) database.

US2014/134979A1 discloses a finite state machine with a server.

US2009/154666A1 discloses devices and methods for receiving, by a telephone device, data of an Interactive Voice Response (IVR) menu tree.

### SUMMARY

In order to solve the problems in the related art that a great deal of waiting time of the user may be consumed and the battery service life of the terminal may be shortened, the present disclosure provides a method and a device for obtaining a voice service. The technical solutions are as follows.

According to a first aspect of embodiments of the present disclosure, there is provided a method for obtaining a voice service, including:
obtaining a service process corresponding to a service number of a current call, wherein the service process includes input prompt information corresponding to respective stages, and the input prompt information is used to prompt a user to input information;
after the service number is connected, or put through, displaying the input prompt information in the service process, and receiving a keyboard signal that is input by the user for responding to the input prompt information;
when the service process includes n stages, displaying input prompt information in an i^{th} stage in the service process, wherein n and i are positive integers, and an initial value of i is 1;
receiving a keyboard signal that is input by the user for responding to the input prompt information in the i^{th} stage;
when i<n, and input prompt information in a (i+1)^{th} stage corresponding to the input prompt information in the i^{th} stage exists in the service process under trigger of the keyboard signal, determining the input prompt information in the (i+1)^{th} stage that is triggered by the keyboard signal according to the service process and the input prompt information in the i^{th} stage;
increasing i by 1, and performing the step of displaying the input prompt information in the i^{th} stage in the service process again;
if i<n, and the input prompt information in the (i+1)^{th}stage corresponding to the input prompt information in the i^{th} stage exists in the service process under the trigger of the keyboard signal, and the input prompt information in the i^{th} stage is prompt information used to prompt the user to input personalized information of the user, sending the keyboard signal to the automatic voice service system; and
receiving voice prompt information returned by the automatic voice service system after the automatic voice service system validates the keyboard signal;
the method further including:
recognizing the voice prompt information as text prompt information;
determining a location of the current call in the service process according to the text prompt information, and using input prompt information at the determined location as the input prompt information in the (i+1)^{th} stage; and
increasing i by 1, and performing the step of displaying the input prompt information in the i^{th} stage in the service process again.

Alternatively, the obtaining the service process corresponding to the service number of the current call includes:
selecting a service process of the service number of the current call from prestored service processes of respective service numbers;
or,
sending the service number to a server which is used to select a service process corresponding to the service number of the current call from prestored service processes of respective service numbers, and receiving the service process of the service number sent by the server.

Alternatively, the displaying the input prompt information in the service process, and receiving the keyboard signal that is input by the user for responding to the input prompt information includes:
Alternatively, the receiving the keyboard signal that is input by the user for responding to the input prompt information in the i^{th} stage includes:
   receiving a single character input by the user, and using an input signal corresponding to the character as the keyboard signal;
   or,
   successively receiving respective characters input by the user, and when a predetermined character is received, using an input signal corresponding to the respective characters received before the predetermined character as the keyboard signal;
   or,
   successively receiving respective characters input by the user, detecting whether a number of the received characters reaches a predetermined number, if the number of the received characters reaches the predetermined number, using an input signal corresponding to the characters of the predetermined number as the keyboard signal.

Alternatively, the determining the input prompt information in the (i+1)^{th} stage that is triggered by the keyboard signal according to the service process and the input prompt information in the i^{th} stage includes:
obtaining a process state machine of the service process, wherein each state in the process state machine is represented by input prompt information corresponding to the state;
determining the input prompt information in the (i+1)^{th} stage that is triggered by the keyboard signal according to the process state machine and the input prompt information in the i^{th} stage.

Alternatively, the method further includes:
if the input prompt information in the i^{th} stage is a first type of prompt information, detecting whether the keyboard signal is one of preset keyboard signals which are prompted to be input by the input prompt information in the i^{th} stage, wherein the first type of prompt information is prompt information used to prompt the user to input a certain keyboard signal of the preset keyboard signals; and
if the keyboard signal is not one of the preset keyboard signals which are prompted to be input by the input prompt information in the i^{th} stage, displaying the input prompt information in the i^{th} stage, or displaying prompt information used to prompt that the input of the keyboard signal is incorrect, or ending communication with the automatic voice service system.

Alternatively, the method further includes:
if the keyboard signal is one of the preset keyboard signals which are prompted to be input by the input prompt information in the i^{th} stage, performing the step of determining the input prompt information in the (i+1)^{th} stage that is triggered by the keyboard signal according to the service process and the input prompt information in the i^{th} stage, when i<n, and the input prompt information in the (i+1)^{th} stage corresponding to the input prompt information in the i^{th} stage exists in the service process under the trigger of the keyboard signal.

According to a second aspect of the embodiments of the present disclosure, there is provided a device for obtaining a voice service, including:
a process obtaining module configured to obtain a service process corresponding to a service number of a current call, wherein the service process includes input prompt information corresponding to respective stages, and the input prompt information is used to prompt a user to input information; and
a signal receiving module configured to, after the service number is put through, display the input prompt information in the service process obtained by the process obtaining module, and receive a keyboard signal that is input by the user for responding to the input prompt information, comprising;
an information display unit configured to, when the service process includes n stages, display input prompt information in an i^{th} stage in the service process, wherein n and i are positive integers, and an initial value of i is 1;
a signal receiving unit configured to receive a keyboard signal that is input by the user for responding to the input prompt information in the i^{th} stage displayed by the information display unit;
an information determination unit configured to, when i<n, and input prompt information in a (i+1)^{th} stage corresponding to the input prompt information in the i^{th} stage exists in the service process under trigger of the keyboard signal, determine the input prompt information in the (i+1)^{th} stage that is triggered by the keyboard signal according to the service process and the input prompt information in the i^{th} stage; wherein
the information display unit is configured to increase i by 1, and perform the step of displaying the input prompt information in the i^{th} stage in the service process again;
a signal sending unit configured to, if i<n, and the input prompt information in the (i+1)^{th} stage corresponding to the input prompt information in the i^{th} stage exists in the service process under the trigger of the keyboard signal, and the input prompt information in the i^{th} stage is prompt information used to prompt the user to input personalized information of the user, send the keyboard signal to an automatic voice service system; and
an information receiving unit configured to receive voice prompt information returned by the automatic voice service system after the automatic voice service system validates the keyboard signal;
wherein the signal receiving module (520) further comprises:
a voice recognition unit configured to recognize the voice prompt information as text prompt information;
a location determination unit configured to determine a location of the current call in the service process according to the text prompt information recognized by the voice recognition unit; and
an information obtaining unit configured to use input prompt information at the determined location as the input prompt information in the (i+1)^{th} stage.

Alternatively, the process obtaining module includes:
a first obtaining unit or a second obtaining unit, wherein
the first obtaining unit is configured to select a service process of the service number of the current call from prestored service processes of respective service numbers; and
the second obtaining unit is configured to send the service number to a server which is used to select a service process corresponding to the service number of the current call from prestored service processes of respective service numbers, and receive the service process of the service number sent by the server.

Alternatively, the device further includes:
a process receiving module configured to receive a service process of a target service number sent by the server;
a process detection module configured to detect whether the prestored service processes of the respective service numbers include the service process of the target service number;
a process storage module configured to save the received service process of the target service number when a detection result of the process detection module is that the prestored service processes of the respective service numbers do not include the service process of the target service number; and
a process update module configured to use the received service process of the target service number to update the saved service process of the target service number when the detection result of the process detection module is that the prestored service processes of the respective service numbers include the service process of the target service number.

Alternatively, the signal receiving unit includes:
a first receiving subunit, a second receiving subunit or a third receiving subunit, wherein
the first receiving subunit is configured to receive a single character input by the user, and use an input signal corresponding to the character as the keyboard signal;
the second receiving subunit is configured to successively receive respective characters input by the user, and when a predetermined character is received, use an input signal corresponding to the respective characters received before the predetermined character as the keyboard signal; and
the third receiving subunit is configured to successively receive respective characters input by the user, detect whether a number of the received characters reaches a predetermined number, if the number of the received characters reaches the predetermined number, use an input signal corresponding to the characters of the predetermined number as the keyboard signal.

Alternatively, the information determination unit includes:
a state machine obtaining subunit configured to obtain a process state machine of the service process, wherein each state in the process state machine is represented by input prompt information corresponding to the state; and
an information determination subunit configured to determine the input prompt information in the (i+1)^{th} stage that is triggered by the keyboard signal according to the process state machine obtained by the state machine obtaining subunit and the input prompt information in the i^{th} stage.

Alternatively, the signal receiving module further includes:
a signal detection unit configured to, when the input prompt information in the i^{th} stage is a first type of prompt information, detect whether the keyboard signal is one of preset keyboard signals which are prompted to be input by the input prompt information in the i^{th} stage, wherein the first type of prompt information is prompt information used to prompt the user to input a keyboard signal of the preset keyboard signals;
a detection result unit configured to, when a detection result of the signal detection unit is that the keyboard signal is not one of the preset keyboard signals which are prompted to be input by the input prompt information in the i^{th} stage, display the input prompt information in the i^{th} stage, or display prompt information used to prompt that the input of the keyboard signal is incorrect, or end communication with the automatic voice service system.

Alternatively, the information determination unit is configured to, when the detection result of the signal detection unit is that the keyboard signal is one of the preset keyboard signals which are prompted to be input by the input prompt information in the i^{th} stage, perform the step of determining the input prompt information in the (i+1)^{th} stage that is triggered by the keyboard signal according to the service process and the input prompt information in the i^{th} stage, when i<n, and the input prompt information in the (i+1)^{th}stage corresponding to the input prompt information in the i^{th} stage exists in the service process under the trigger of the keyboard signal.

According to a fourth aspect of the embodiments of the present disclosure, there provides a computer program, which when executing on a processor of a device for obtaining a voice service, performs the above method for obtaining a voice service.

The technical solutions provided by the embodiments of the present disclosure may include the following advantageous effects.

By directly displaying the input prompt information in the service process of the current call on a screen of the terminal, the user may directly input according to the input prompt information displayed on the screen without waiting for playing the whole voice prompt information, which avoids the problems in the related art that the user needs to listen to the whole voice prompt information, then he/she can know what kind of response signal should be input to continue the query, it consumes a great deal of waiting time of the user and shortens the battery service life of the terminal, thus the effect that the user may directly input according to the input prompt information displayed on the screen and the waiting time of the user is shorten is achieved.

It is to be understood that both the foregoing general description and the following detailed description are exemplary only and are not restrictive of the present disclosure.

### BRIEF DESCRIPTION OF THE DRAWINGS

The accompanying drawings, which are hereby incorporated in and constitute a part of this specification, illustrate embodiments being consistent with the present disclosure and, together with the description, serve to explain the principles of the present disclosure.
Fig. 1 is a schematic diagram illustrating an implementary environment involved in a method for obtaining a voice service, according to partial exemplary embodiments;
Fig. 2 is a flow chart showing a method for obtaining a voice service, according to an exemplary embodiment;
Fig. 3A is a flow chart showing a method for obtaining a voice service, according to another exemplary embodiment;
Fig. 3B is a display schematic diagram illustrating display of input prompt information on a terminal, according to an exemplary embodiment;
Fig. 3C is another display schematic diagram illustrating display of input prompt information on a terminal, according to an exemplary embodiment;
Fig. 3D is still another display schematic diagram illustrating display of input prompt information on a terminal, according to an exemplary embodiment;
Fig. 4 is a schematic diagram illustrating a device for obtaining a voice service, according to an exemplary embodiment;
Fig. 5A is a schematic diagram illustrating a device for obtaining a voice service, according to another exemplary embodiment;
Fig. 5B is a schematic diagram illustrating a signal receiving unit, according to another exemplary embodiment;
Fig. 5C is a schematic diagram illustrating an information determination unit, according to another exemplary embodiment; and
Fig. 6 is a schematic diagram illustrating a device used for obtaining a voice service, according to an exemplary embodiment.

### DETAILED DESCRIPTION

Exemplary embodiments will be described in details herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners which are consistent with the present disclosure. On the contrary, they are only examples of devices and methods that are consistent with some aspects of the present disclosure as recited in the claims.

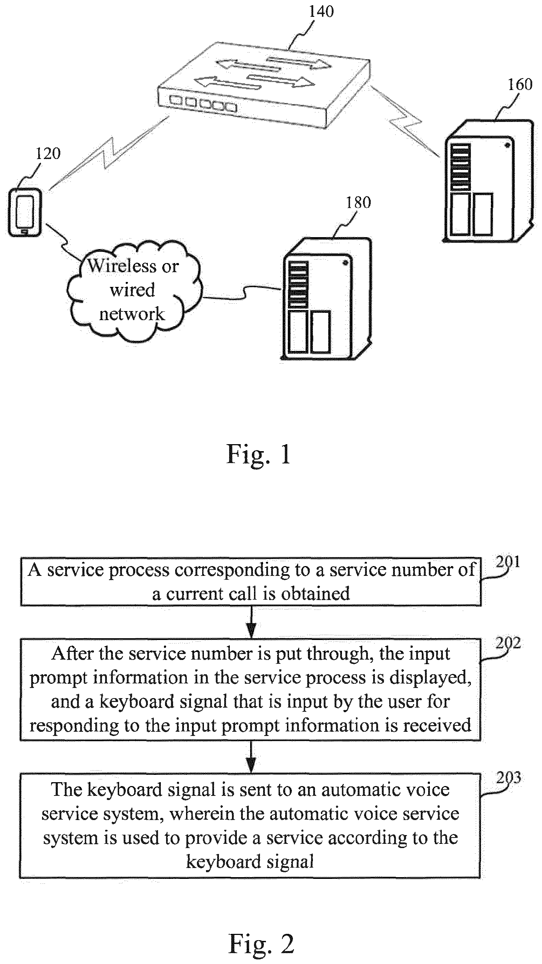

Fig. 1 is a schematic diagram illustrating structure of an implementation environment involved in each embodiment of the present disclosure. The implementation environment includes a terminal 120, a switch 140 and an automatic voice service apparatus160.

The terminal 120 includes a communication component configured to communicate with other apparatuses in a wired or wireless manner. The terminal 120 may be a telephone set, a cell phone, a tablet PC or the like.

The terminal 120 may be connected to the switch 140 in a wired or wireless manner.

The switch 140 is configured to build a communication connection between the terminal 120 and the automatic voice service apparatus 160, to achieve information exchange between the terminal 120 and the automatic voice service apparatus 160.

The switch 140 may be connected to the automatic voice service apparatus 160 in a wired or wireless manner.

The automatic voice service apparatus 160 is installed with an automatic voice service system. The automatic voice service apparatus 160 may be a terminal apparatus, a server, a server cluster composed of several servers, or a cloud computing service center.

Alternatively, the implementation environment may further include a server 180 which is connected to the terminal 120 via a wired network or a wireless network.

The server 180 may be a server, a server cluster composed of several servers, or a cloud computing service center.

Fig. 2 is a flow chart showing a method for obtaining a voice service, according to an exemplary embodiment. As shown in Fig. 2, the method for obtaining the voice service is applied to the terminal 120 in the implementation environment shown in Fig. 1. The method for obtaining the voice service may include the following steps.

In step 201, a service process corresponding to a service number of a current call is obtained,
wherein the service process includes input prompt information corresponding to respective stages, and the input prompt information is used to prompt a user to input information.

In step 202, after the service number is put through, the input prompt information in the service process is displayed, and a keyboard signal that is input by the user for responding to the input prompt information is received.

In step 203, the keyboard signal is sent to an automatic voice service system, wherein the automatic voice service system is used to provide a service according to the keyboard signal.

In conclusion, in the method for obtaining the voice service provided by the embodiments of the present disclosure, by directly displaying the input prompt information in the service process of the current call on the screen of the terminal, the user may directly input according to the input prompt information displayed on the screen without waiting for playing the whole voice prompt information completely, which avoids the problems in the related art that the user does not know what kind of response signal should be input to continue the query until he or she listens to the whole voice prompt information, which consumes a great deal of waiting time of the user and shortens the battery service life of the terminal, thus the effect that the user may directly input according to the input prompt information displayed on the screen and the waiting time of the user is shortened is achieved.

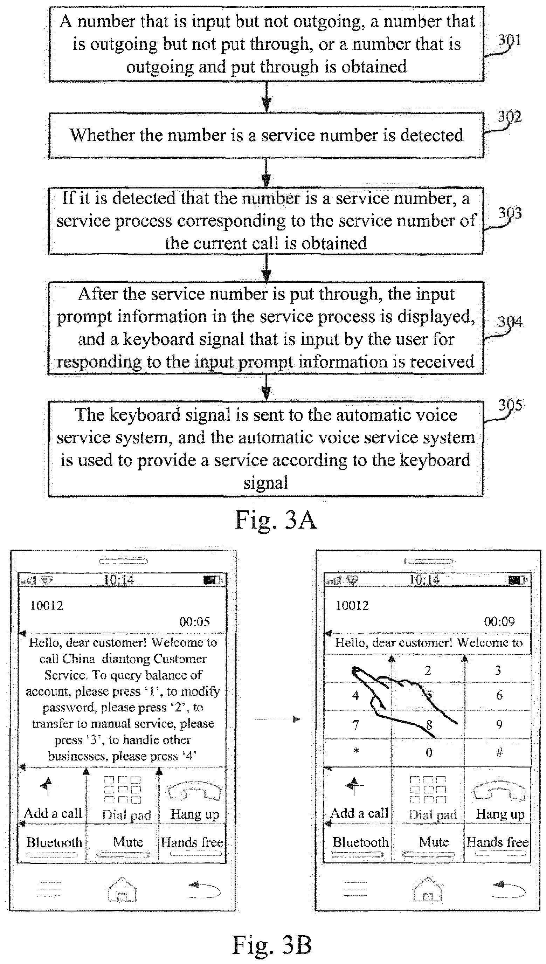

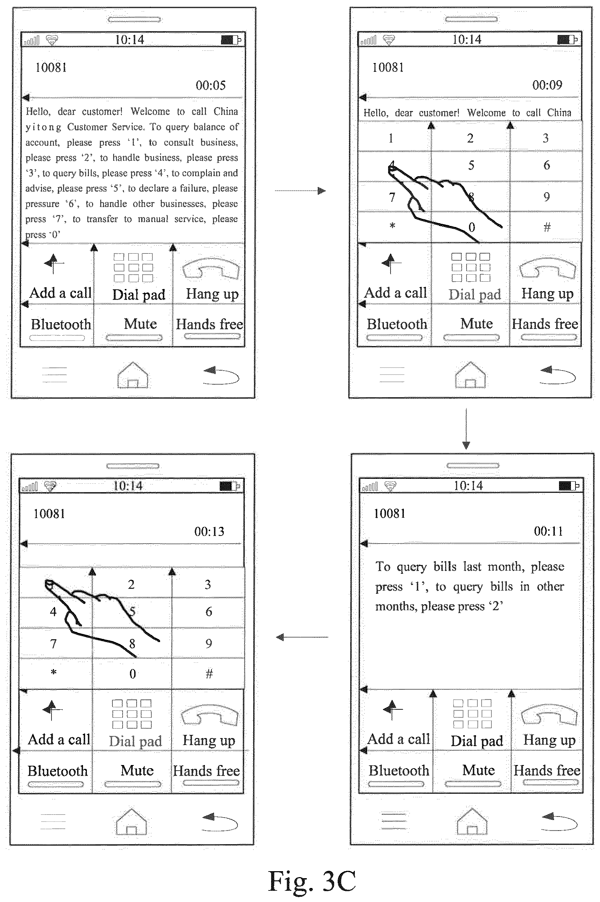

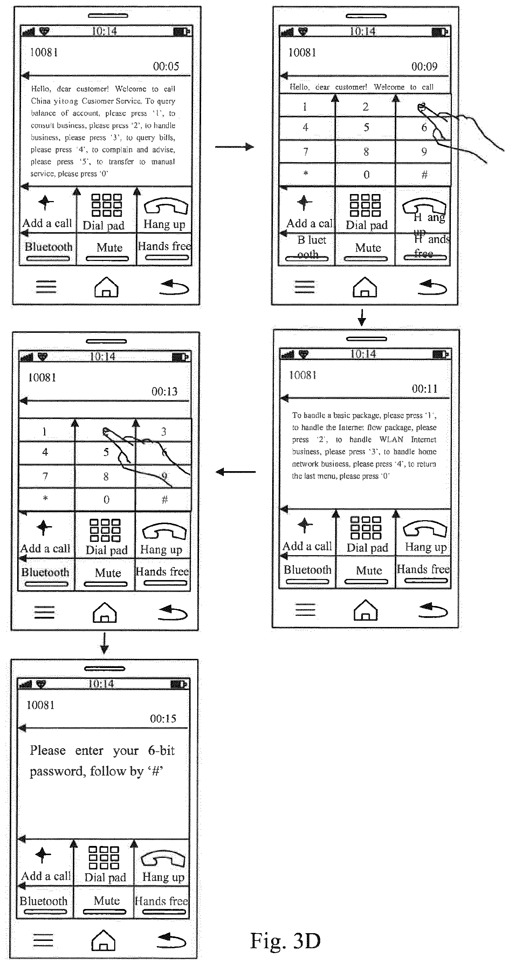

Fig. 3 is a flow chart showing a method for obtaining a voice service, according to an exemplary embodiment. As shown in Fig. 3, the method for obtaining the voice service is applied to the terminal 120 in the implementation environment shown in Fig. 1. The method for obtaining the voice service may include the following steps.

In step 301, a number that is input but not outgoing, a number that is outgoing but not put through, or a number that is outgoing and put through is obtained,
wherein the number that is input but not outgoing refers to a number input by the user through a numeric keypad of a dialing interface or a number that is selected from a contact list and input by the user, and the number is not triggered by the user to be outgoing.

The number that is outgoing but not put through refers to a number which is triggered by the user to be outgoing, but the number is not put through to the automatic voice service system temporarily, that is, the communication connection is not built between the terminal and the automatic voice service apparatus through the switch temporarily.

The number that is outgoing and put through refers to a number which is triggered by the user to be outgoing, and the number is put through to the automatic voice service system, that is, the communication connection is built between the terminal and the automatic voice service apparatus through the switch.

In step 302, whether the number is a service number is detected.

The terminal detects whether the obtained number is a service number. The service number refers to a number that is provided by different merchants to provide an automatic voice service for a user. The service number is usually a customized phone number, and the user may obtain various kinds of services provided by different merchants by dialing the service number through the terminal such as a telephone set or a cell phone. In actual implementation, the terminal may detect whether the obtained number is a number in a number database, if it is, it is determined that the obtained number is a service number; and if it is not, it is determined that the obtained number is not a service number. The number database includes respective service numbers.

For example, a service number of a telecommunication operator is 10081, a service number of a bank is 95555, and a service number of a ticketing service system is 12306 or the like.

In step 303, if it is detected that the number is a service number, a service process corresponding to the service number of the current call is obtained.

If a detection result of the terminal is that the obtained number is a service number, the terminal may obtain a service process corresponding to the service number of the current call. The current call includes any one of a call that is input but not outgoing, a call that is outgoing but not put through, and a call that is outgoing and put through. The service process includes input prompt information corresponding to respective stages, and the input prompt information is used to prompt the user to input information.

If the detection result of the terminal is that the obtained number is not a service number, the process is ended.

Since the service process may be locally stored in the terminal, or may be stored in a remote server, the step that the terminal obtains the service process corresponding to the service number according to different locations where the service process is stored may include the following two possible implementary manners.

In the first possible implementary manner, when the service process is locally stored in the terminal, the step may include:
selecting a service process of a service number of a current call from prestored service processes of respective service numbers.

The prestored service processes of the respective service numbers are service processes which are obtained from the server and saved by the terminal. For example, the server initiatively pushes the service process of the service number to the terminal, and the terminal receives the service process of the service number pushed by the server, and saves the received service process of the service number.

In the second possible implementary manner, when the service process is stored in the server, the step may include the following steps.
(1). The service number is sent to the server.
(2).The server selects the service process corresponding to the service number of the current call from prestored service processes of respective service numbers.
   The server receives the service number sent by the terminal, selects the service process corresponding to the received service number from the prestored service processes of the respective service numbers, and uses the selected service process as the service process corresponding to the current call.
(3). The service process of the service number sent by the server is received.

Correspondingly, the terminal may receive the service process of the service number sent by the server, and then obtain the service process of the service number of the current call.

In step 304, after the service number is put through, the input prompt information in the service process is displayed, and a keyboard signal that is input by the user for responding to the input prompt information is received.

After the terminal dials the service number, that is, after service number is put through to the automatic voice service system, the terminal may display the obtained input prompt information in the service process. After the user views the input prompt information displayed on the terminal, the user may input the keyboard signal for responding to the input prompt information in the terminal according to the input prompt information displayed on the terminal. Correspondingly, the terminal may receive the keyboard signal which is input by the user for responding to the input prompt information. The keyboard signal refers to a signal input by the user through a physical keyboard in the terminal or through a virtual keyboard in a touch screen in the terminal.

For example, referring to Fig. 3B, after the terminal dials '10012', the terminal may display the input prompt information shown in Fig. 3B, and after the user views the input prompt information displayed on the terminal, the user may query a balance of account by inputting '1' through a terminal keyboard of the terminal. Correspondingly, the terminal may receive the keyboard signal input by the user. Since time taken for the terminal to display the input prompt information is much less than time taken for the terminal to play voice prompt information returned by the automatic voice service system, the user directly inputs according to the input prompt information displayed on the terminal without listening to the voice prompt information returned by the automatic voice service system, which saves the waiting time of the user, and increases the efficiency for obtaining the voice service by the terminal.

Since the service process may include two or more stages, each of the stages is performed in a certain sequence, and the call may enter another stage from one stage under trigger of the keyboard signal input by the user, when the service process obtained by the terminal includes n stages, this step may include the following steps.

Firstly, input prompt information in an i^{th} stage in a service process is displayed.

The terminal may display input prompt information in an i^{th} stage in a service process, wherein n and i are positive integers, and an initial value of i is 1.

In actual implementation, after the terminal dials the service number, the terminal may firstly display input prompt information in a first stage in the service process.

Secondly, a keyboard signal that is input by the user for responding to the input prompt information in the i^{th} stage is received.

After the user views the input prompt information in the i^{th} stage displayed on the terminal, the user may input the keyboard signal for responding to the input prompt information in the i^{th} stage in the terminal keyboard of the terminal according to the user's use requirements. Correspondingly, the terminal may receive the keyboard signal that is input by the user for responding to the input prompt information in the i^{th} stage.

In actual implementation, this step may include the following three possible implementary manners.

In the first possible implementary manner, the step may include:
receiving a single character input by the user, and using an input signal corresponding to the character as the keyboard signal.

When the input prompt information in the i^{th} stage displayed on the terminal is a first type of prompt information, and the first type of prompt information is prompt information used to prompt the user to input a certain keyboard signal of preset keyboard signals, since the keyboard signal input by the user is usually a keyboard signal corresponding to one character, at this time, after the terminal receives the single character input by the user, the terminal may use the input signal corresponding to the character as the keyboard signal.

In actual implementation, the step in which the terminal uses the input signal corresponding to the character as the keyboard signal may include that the terminal generates a DTMF (Dual Tone Multi Frequency) signal corresponding to the character, and uses the generated DTMF as the keyboard signal. The DTMF signal is a composite signal that is composed of a high-frequency signal and a superposed low-frequency signal. For example, a high-frequency signal group includes 4 different high-frequency signals, a low-frequency signal group includes 4 different low-frequency signals, and 16 different composite signals may be obtained by respectively selecting one signal from each of the high-frequency signal group and the low-frequency signal group to be composed. Each type of the composite signal represents one button number. For example, character "1" may be represented by a composite signal which is composed of a high-frequency signal of 1209Hz and a superposed low-frequency signal of 697Hz.

In the second possible implementary manner, the step may include:
successively receiving respective characters input by the user, and when a predetermined character is received, using an input signal corresponding to the respective characters received before the predetermined character as the keyboard signal.

Since when the input prompt information in the i^{th} stage is a second type of prompt information, and the second type of prompt information is prompt information used to prompt the user to input personalized information of the user, the keyboard signal input by the user usually corresponds to two or more keyboard signals. For example, when the input prompt information in the i^{th} stage is prompt information for prompting the user to input a password or prompting the user to input a bank card number, at this time, the terminal may successively receive respective characters input by the user, and when a predetermined character is received, use an input signal corresponding to the respective characters received before the predetermined character as the keyboard signal. In actual implementation, the terminal may generate a DTMF signal corresponding to each character received before the predetermined character is received, and use the respective generated DTMF signals as the keyboard signals.

For example, the predetermined character is described to be '#', when the input prompt information in the i^{th} stage displayed on the terminal prompts the user to input a password, the user inputs '679925#' in the terminal keyboard, the terminal generates the DMTF signal corresponding to each character in '679925', and uses the respective generated DMTF signals as the keyboard signals.

In the third possible implementary manner, the step may include:
successively receiving respective characters input by the user, detecting whether a number of the received characters reaches a predetermined number, if the number of the received characters reaches the predetermined number, using an input signal corresponding to the characters of the predetermined number as the keyboard signal.

Since a number of bits of some information in the personalized information that needs to be input by the user is usually constant, for example, a password is usually 6-bit, a card number of a debit card is usually 19-bit, and a card number of a credit card is usually 16-bit, and when the user inputs characters, the terminal may also detect whether the number of the received characters reaches a predetermined number. For example, when input prompt information displayed on the terminal is to prompt the user to input the password, the terminal may detect whether the number of the received characters reaches 6-bit, if the number of the received characters reaches the predetermined number, an input signal corresponding to the predetermined number of characters is taken as the keyboard signal; and if the number of the received characters does not reach the predetermined number, the terminal continues waiting for the user to input, until the number of the received characters reaches the predetermined number. In actual implementation, the terminal may generate a DTMF signal corresponding to each character in the predetermined number of characters which are received, and use the respective generated DTMF signals as the keyboard signals.

Thirdly, when i < n, and input prompt information in a (i+1)^{th} stage corresponding to the input prompt information in the i^{th} stage exists in the service process under trigger of the keyboard signal, the input prompt information in the (i+1)^{th} stage that is triggered by the keyboard signal is determined according to the service process and the input prompt information in the i^{th} stage.

The step in which the terminal determines the input prompt information in the (i+1)^{th} stage that is triggered by the keyboard signal may include the following steps.
(1). A process state machine of the service process is obtained, wherein each state in the process state machine is represented by input prompt information corresponding to the state.
   After the terminal obtains the service process of the service number, the terminal may build a process state machine of the service process according to the obtained service process, each state in the process state machine is represented by input prompt information corresponding to the state, such that after the terminal receives the keyboard signal input by the user, in order to perform the following steps, the terminal may obtain the process state machine of the service process.
(2). The input prompt information in the (i+1)^{th} stage that is triggered by the keyboard signal is determined according to the process state machine and the input prompt information in the i^{th} stage.

The terminal determines the input prompt information in the (i+1)^{th} stage that is triggered by the keyboard signal according to the obtained process state machine and the input prompt information in the i^{th} stage that is displayed before the keyboard signal is received.

It is to be explained that, when i>n, or the input prompt information in the (i+1)^{th} stage corresponding to the input prompt information in the i^{th} stage does not exist in the service process under trigger of the keyboard signal, the terminal may directly proceed to step 305.

Fourthly, i is increased by 1, and the step of displaying the input prompt information in the i^{th} stage in the service process is performed again.

After the terminal determines the input prompt information in the (i+1)^{th} stage, the terminal may increase i by 1, and perform the step of displaying the input prompt information in the i^{th} stage in the service process again.

Hereinafter, the step is further described in a detailed embodiment, a service process of '10081' is described to include four stages, after the terminal dials '10081', the terminal may firstly display the input prompt information in the first stage shown in Fig. 3C. After the user views input prompt information displayed on the terminal, the user may make a request for querying bills by inputting '4' through the keyboard, and since input prompt information in the second stage corresponding to the input prompt information in the first stage exists under trigger of '4', the terminal may determine the input prompt information in the second stage under the trigger of '4' according to a process state machine of '10081', and display the determined input prompt information in the second stage. After the user views the input prompt information displayed on the terminal, the user may input '1' to make a request for querying bills of last months. Since input prompt information in the third stage corresponding to the input prompt information in the second stage does not exist in the service process under the trigger of '1', the terminal may ending skipping and directly perform step 305.

Furthermore, it takes a certain time from the time when the terminal receives the keyboard signal, and determines the input prompt information in the (i+1)^{th} stage to the time when the terminal displays the determined input prompt information, and it also takes a certain time from the time when the terminal sends the keyboard signal to the automatic voice service system to the time when the terminal receives the voice prompt information returned by the automatic voice service system, and a certain time interval may exist between both of the time, in order to guarantee that the input prompt information displayed on the terminal and the voice prompt information returned by the automatic voice service system can be synchronized, the service process may further include time interval from the time when the terminal sends the received keyboard signal to the automatic voice service system to the time when the terminal receives the voice prompt information returned by the automatic voice service system after the terminal displays the input prompt information in the i^{th} stage. At this time, the above fourth substep may include the following steps.
1. A length of time in which the terminal receives the keyboard signal is obtained.
   The length of time in which the terminal receives the keyboard signal refers to a length of time from the moment when the terminal receives the keyboard signal to the current moment.
2. Whether the obtained length of time reaches the time interval is determined.
   The terminal determines whether the obtained length of time reaches the time interval. Respective time intervals in the service process may be the same or may be different, the present embodiment is not limited thereto. Moreover, in the present embodiment, the time interval is described to be 3S, and the terminal may determine whether the obtained length of time reaches 3S.
3. If it is determined that the obtained length of time reaches the time interval, the determined input prompt information in the (i+1)^{th} stage is directly displayed.
   If it is determined that the obtained length of time reaches the time interval, the terminal may directly display the determined input prompt information in the (i+1)^{th} stage. Thus, when the terminal displays the input prompt information in the (i+1)^{th} stage, the terminal may also receive automatic voice prompt information corresponding to the input prompt information in the (i+1)^{th} stage, which achieves synchronization of them.
4. If it is determined that the obtained length of time does not reach the time interval, after the length of time reaches the time interval, the determined input prompt information in the (i+1)^{th} stage is displayed.

If the length of time does not reach the time interval, the terminal may enter a waiting state, and when the length of time reaches the time interval, the terminal displays the determined input prompt information in the (i+1)^{th} stage.

In step 305, the keyboard signal is sent to the automatic voice service system, and the automatic voice service system is used to provide a service according to the keyboard signal.

The terminal may send the keyboard signal to the automatic voice service system, and the automatic voice service system provides a service according to the keyboard signal after receiving the keyboard signal.

When the keyboard signal is a DTMF signal, the terminal may send the DTMF signal to the automatic voice service system. For example, the terminal may send a DTMF signal corresponding to '1' to the automatic voice service system, and the automatic voice service system returns the queried bills of last month after receiving the DTMF signal.

It is to be explained that, in step 304, when the input prompt information in the i^{th} stage is a first type of prompt information, and the first type of prompt information is prompt information used to prompt the user to input a keyboard signal of preset keyboard signals, before the terminal performs the third substep, the terminal may also perform the following steps.
(1). Whether the keyboard signal is one of the preset keyboard signals which are prompted to be input by the input prompt information in the i^{th} state is determined.
   Since the input prompt information in the i^{th} stage displayed on the terminal is to prompt the user to input a keyboard signal of designated keyboard signals, in order to determine whether the keyboard signal input by the user is valid, the terminal may detect whether the received keyboard signal is one of the preset keyboard signals which are prompted to be input by the input prompt information in the i^{th} stage.
   For example, referring to Fig. 3C, after the terminal displays the input prompt information in the first stage and receives a keyboard signal corresponding to '*' input by the user, the terminal may detect whether the received keyboard signal corresponds to one of keyboard signals '0, 1, 2, 3, 4, 5, 6 and 7'.
(2). If the keyboard signal is not one of the preset keyboard signals which are prompted to be input by the input prompt information in the i^{th} stage, the input prompt information in the i^{th} stage is displayed, or prompt information used to prompt that the input of the keyboard signal is incorrect is displayed, or communication with the automatic voice service system is ended.
   If a detection result of the terminal is that the keyboard signal is not one of the preset keyboard signals which are prompted to be input by the input prompt information in the i^{th} stage, the terminal may display the input prompt information in the i^{th} stage, or may display prompt information used to prompt that the input of the keyboard signal is incorrect, or may directly end communication with the automatic voice service system, the present embodiment is not limited thereto. For example, the detection result of the terminal is that '*' is not corresponding to one of the keyboard signals '0, 1, 2, 3, 4, 5, 6 and 7', at this time, the terminal may end this call.
(3). If the keyboard signal is one of the preset keyboard signals which are prompted to be input by the input prompt information in the i^{th} stage, the step of determining the input prompt information in the (i+1)^{th} stage that is triggered by the keyboard signal according to the service process and the input prompt information in the i^{th} stage, when i<n, and input prompt information in a (i+1)^{th} stage corresponding to the input prompt information in the i^{th} stage exists in the service process under trigger of the keyboard signal is performed.

If the detection result of the terminal is that the signal is one of the preset keyboard signals which are prompted to be input by the input prompt information in the i^{th} stage, the terminal may continue performing the third substep, which is not to be described repeatedly herein.

It is further to be explained that, in step 304, when i<n, and the input prompt information in the (i+1)^{th} stage corresponding to the input prompt information in the i^{th} stage exists in the service process under the trigger of the keyboard signal, the input prompt information in the i^{th} stage is a second type of prompt information, and the second type of prompt information is prompt information used to prompt the user to input personalized information of the user, the terminal may also perform the following steps.
(1). The keyboard signal is sent to the automatic voice service system.
   Since different users have different personalized information, the terminal cannot determine whether the keyboard signal input by the user is correct or not according to the obtained service process, in order to determine the keyboard signal input by the user, the terminal may send the keyboard signal to the automatic voice service system.
   For example, after the user inputs a 6-bit password, since the terminal cannot determine whether the password input by the user is correct or not, at this time, the terminal may send a received keyboard signal corresponding to the password to the automatic voice service system.
   After the automatic voice service system receives the keyboard signal sent by the terminal, the automatic voice service system may validate the received keyboard signal, and returns voice prompt information after validating the keyboard signal. For example, after receiving the keyboard signal, the automatic voice service system validates whether the password input by the user is correct or not according to the keyboard signal, when the determination result is that the input is correct, the automatic voice service system may directly enter next stage and return a corresponding voice prompt information; and when the determination result is that the input is incorrect, the automatic voice service system may return prompt information used to prompt that the input is incorrect. For example, the returned content is voice prompt information of 'the password you entered is incorrect, please enter again', which is not to be described repeatedly herein.
(2). The voice prompt information returned by the automatic voice service system is received after the automatic voice service system validates the keyboard signal.
(3). The voice prompt information is recognized as text prompt information.
   After the terminal receives the voice prompt information returned by the automatic voice service system, the terminal may start a voice identification function, and recognize the received voice prompt information as text prompt information.
(4). A location of the current call in the service process is determined according to the text prompt information, and the input prompt information at the determined location is used as the input prompt information in the (i+1)^{th} stage.

The terminal determines a location of the current call in the service process according to recognized text information, and uses the input prompt information at the determined location as the input prompt information in the (i+1)^{th} stage.

For example, when the determination result of the automatic voice service system is that the password input by the user is correct and it returns to the voice prompt information next stage, the terminal may determine that the current call has entered the (i+1)^{th} stage in the service process according to the text prompt information corresponding to the voice prompt information. If the determination result of the automatic voice service system is that the password input by the user is incorrect and it returns to the corresponding prompt information, the terminal may determine the location of the call in the service process according to the text prompt information corresponding to the voice prompt information, and use the input prompt information at the determined location as the input prompt information in the (i+1)^{th} stage.

After the terminal determines the input prompt information in the (i+1)^{th} stage, the terminal may increase i by 1, and perform the step of displaying the input prompt information in the i^{th} stage in the service process again, that is, the terminal performs the first substep again, the present embodiment is not limited thereto.

It is to be explained that, when the automatic voice service system validates the keyboard signal, it is found that the call needs to be switched to another automatic voice service system, for example, the automatic voice service system detects that a bank card number input by the user is a card number of a 'VIP' (Very Important Person) card, the automatic voice service system may transfer the call to a VIP automatic voice service system, and return voice prompt information to the user, and after the terminal receives the voice prompt information, the terminal may obtain a service process of the VIP automatic voice service system, and continues to determine input prompt information that needs to be displayed according to the newly obtained service process, the present embodiment is not limited thereto.

Hereinafter, it is described in detail in another detailed example, referring to Fig. 3D, after the terminal displays input prompt information in the first stage in Fig. 3D, the user inputs '3' to make a request for business handling, and then the terminal determines input prompt information in the second stage according to a process state machine and a keyboard signal '3', and displays the input prompt information in the second stage. After the user views the input prompt information in the second stage displayed on the terminal, the user inputs '2' to make a request for handling the Internet flow package business, since input prompt information in the third stage corresponding to the input prompt information in the second stage exists under trigger of '2', the terminal may determine the input prompt information in the third stage under the trigger of '2' according to the process state machine of '10081', and display the input prompt information in the third stage. After the user views the input prompt information displayed on the terminal, the user may input a 6-bit password of his/her own cell phone account, and end by '#', and the terminal sends a keyboard signal corresponding to the 6-bit password to the automatic voice service system, receives voice prompt information returned by the automatic voice service system after the automatic voice service system validates that the password is correct. After the terminal recognizes the voice prompt information as text prompt information, the terminal determines that the call has entered the fourth stage in the service process, at this time, the terminal may display input prompt information in the fourth stage.

It is further to be explained that, since service processes of some automatic voice service systems may change over time, or some new voice service systems may occur, and when the server detects these changes, the server may send a service process of a target service number to the terminal. Correspondingly, the terminal may perform the following steps.

Firstly, the service process of the target service number sent by the server is received.

The terminal may correspondingly receive the service process of the target service number sent by the server.

Secondly, whether prestored service processes of respective service numbers include the service process of the target service number is detected.

The terminal may detect whether prestored service processes of respective service numbers have a service process of a service number same as that of the target service number, when the detection result is that the same number exists, the terminal may determine that the prestored service processes of the respective service numbers include the service process of the target service number; and when the detection result is that the same number does not exist, the prestored service processes of the respective service numbers do not have the service process of the target service number.

Thirdly, if the service process of the target service number is not included, the received service process of the target service number is saved.

If the detection result is that the service process of the target service number is not included, the terminal may store the received service process of the target service number.

Fourthly, if the service process of the target service number is included, the received service process of the target service number is used to update the saved service process of the target service number.

If the service process of the target service number is included, it means that the service process of the target service number may be updated, at this time, in order to make the terminal obtain the newest service process, the terminal may use the received service process of the target service number to update the saved service process of the target service number, the present embodiment is not limited thereto.

In conclusion, in the method for obtaining the voice service provided by the embodiments of the present disclosure, by directly displaying the input prompt information in the service process of the current call on the screen of the terminal, the user may directly input according to the input prompt information displayed on the screen without waiting for playing the whole voice prompt information completely, which avoids the problems in the related art that the user does not know what kind of response signal should be input to continue the query until he or she listens to the whole voice prompt information, which consumes a great deal of waiting time of the user and shortens the battery service life of the terminal, thus the effect that the user may directly input according to the input prompt information displayed on the screen and the waiting time of the user is shortened is achieved. Meanwhile, in the present embodiment, by displaying the input prompt information, the user may directly read the input prompt information without listening to voice prompt, such that the communication may be achieved and it is convenient for people who have weak hearing ability to use.

Embodiments of the device of the present disclosure are disclosed hereinafter, which may be configured to carry out the embodiments of the method of the present disclosure. For details which are not disclosed in the embodiments of the device of the present disclosure, the embodiments of the method of the present disclosure are referred.

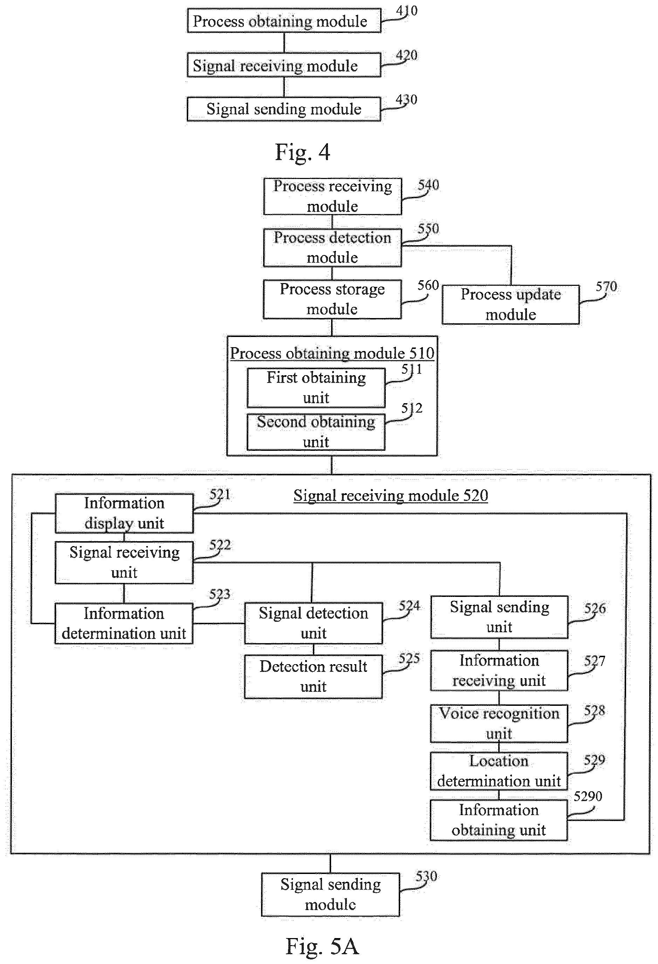

Fig. 4 is a schematic diagram illustrating a device for obtaining a voice service, according to an exemplary embodiment. As shown in Fig. 4, the device for obtaining the voice service is applied to the terminal 120 in the implementation environment shown in Fig. 1. The device for obtaining the voice service may include, but not limited to, a process obtaining module 410, a signal receiving module 420 and a signal sending module 430.

The process obtaining module 410 is configured to obtain a service process corresponding to a service number of a current call, wherein the service process includes input prompt information corresponding to respective stages, and the input prompt information is used to prompt a user to input information.

The signal receiving module 420 is configured to, after the service number is put through, display the input prompt information in the service process obtained by the process obtaining module 410, and receive a keyboard signal that is input by the user for responding to the input prompt information.

The signal sending module 430 is configure to send the keyboard signal received by the signal receiving module 420 to an automatic voice service system, wherein the automatic voice service system is used to provide a service according to the keyboard signal.

In conclusion, in the device for obtaining the voice service provided by the embodiments of the present disclosure, by directly displaying the input prompt information in the service process of the current call on the screen of the terminal, the user may directly input according to the input prompt information displayed on the screen without waiting for playing the whole voice prompt information completely, which avoids the problems in the related art that the user does not know what kind of response signal should be input to continue the query until he or she listens to the whole voice prompt information, which consumes a great deal of waiting time of the user and shortens the battery service life of the terminal, thus the effect that the user may directly input according to the input prompt information displayed on the screen and the waiting time of the user is shortened is achieved. Meanwhile, in the present embodiment, by displaying the input prompt information, the user may directly read the input prompt information without listening to voice prompt, such that the communication may be achieved and it is convenient for people who have weak hearing ability to use.

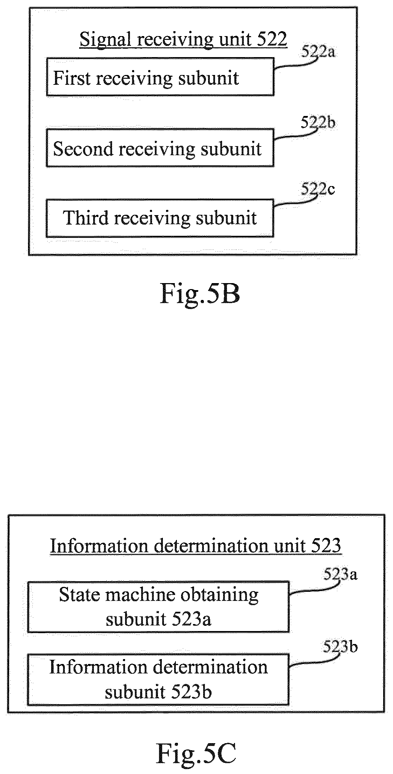

Fig. 5 is a schematic diagram illustrating a device for obtaining a voice service, according to another exemplary embodiment. As shown in Fig. 5, the device for obtaining the voice service is applied to the terminal 120 in the implementation environment shown in Fig. 1. The device for obtaining the voice service may include, but not limited to, a process obtaining module 510, a signal receiving module 520 and a signal sending module 530.

The process obtaining module 510 is configured to obtain a service process corresponding to a service number of a current call, wherein the service process includes input prompt information corresponding to respective stages, and the input prompt information is used to prompt a user to input information.

The signal receiving module 520 is configured to, after the service number is put through, display the input prompt information in the service process obtained by the process obtaining module 510, and receive a keyboard signal that is input by the user for responding to the input prompt information.

The signal sending module 530 is configure to send the keyboard signal received by the signal receiving module 520 to an automatic voice service system, wherein the automatic voice service system is used to provide a service according to the keyboard signal.

In a first possible implementary manner of the present embodiment, the process obtaining module 510 includes:
a first obtaining unit 511 or a second obtaining unit 512.

The first obtaining unit 511 is configured to select a service process of the service number of the current call from prestored service processes of respective service numbers.

The second obtaining unit 512 is configured to send the service number to a server which is used to select a service process corresponding to the service number of the current call from prestored service processes of respective service numbers, and receive the service process of the service number sent by the server.

In a second possible implementary manner of the present embodiment, the device further includes:
a process receiving module 540 configured to receive a service process of a target service number sent by the server;
a process detection module 550 configured to detect whether the prestored service processes of the respective service numbers include the service process of the target service number;
a process storage module 560 configured to save the received service process of the target service number when a detection result of the process detection module 550 is that the prestored service processes of the respective service numbers do not include the service process of the target service number; and
a process update module 570 configured to use the received service process of the target service number to update the saved service process of the target service number when the detection result of the process detection module 550 is that the prestored service processes of the respective service numbers include the service process of the target service number.

In a third possible implementary manner of the present embodiment, the signal receiving module 520 includes:
an information display unit 521 configured to, when the service process includes n stages, display input prompt information in an i^{th} stage in the service process, wherein n and i are positive integers, and an initial value of i is 1;
a signal receiving unit 522 configured to receive a keyboard signal that is input by the user for responding to the input prompt information in the i^{th} stage displayed by the information display unit 521;
an information determination unit 523 configured to, when i<n, and input prompt information in a (i+1)^{th} stage corresponding to the input prompt information in the i^{th} stage exists in the service process under trigger of the keyboard signal, determine the input prompt information in the (i+1)^{th} stage that is triggered by the keyboard signal according to the service process and the input prompt information in the i^{th} stage; wherein
the information display unit 521 is configured to increase i by 1, and perform the step of displaying the input prompt information in the i^{th} stage in the service process again.

Referring to Fig. 5B, in a fourth possible implementary manner of the present embodiment, the signal receiving unit 522 includes:
a first receiving subunit 522a, a second receiving subunit 522b or a third receiving subunit 522c.

The first receiving subunit 522a is configured to receive a single character input by the user, and use an input signal corresponding to the character as the keyboard signal.

The second receiving subunit 522b is configured to successively receive respective characters input by the user, and when a predetermined character is received, use an input signal corresponding to the respective characters received before the predetermined character as the keyboard signal.

The third receiving subunit 522c is configured to successively receive respective characters input by the user, detect whether a number of the received characters reaches a predetermined number, if the number of the received characters reaches the predetermined number, use an input signal corresponding to the characters of the predetermined number as the keyboard signal.

Referring to Fig. 5C, in a fifth possible implementary manner of the present embodiment, the information determination unit 523 includes:
a state machine obtaining subunit 523a configured to obtain a process state machine of the service process, wherein each state in the process state machine is represented by input prompt information corresponding to the state; and
an information determination subunit 523b configured to determine the input prompt information in the (i+1)^{th} stage that is triggered by the keyboard signal according to the process state machine obtained by the state machine obtaining subunit 523 a and the input prompt information in the i^{th} stage.

In a sixth possible implementary manner of the present embodiment, the signal receiving module 520 further includes:
a signal detection unit 524 configured to, when the input prompt information in the i^{th} stage is a first type of prompt information, detect whether the keyboard signal is one of preset keyboard signals which are prompted to be input by the input prompt information in the i^{th} stage, wherein the first type of prompt information is prompt information used to prompt the user to input a keyboard signal of the preset keyboard signals; and
a detection result unit 525 configured to, when a detection result of the signal detection unit 524 is that the keyboard signal is not one of the preset keyboard signals which are prompted to be input by the input prompt information in the i^{th} stage, display the input prompt information in the i^{th} stage, or display prompt information used to prompt that the input of the keyboard signal is incorrect, or end communication with the automatic voice service system.

In a seventh possible implementary manner of the present embodiment,
the information determination unit 523 is configured to, when the detection result of the signal detection unit 524 is that the keyboard signal is one of the preset keyboard signals which are prompted to be input by the input prompt information in the i^{th} stage, perform the step of determining the input prompt information in the (i+1)^{th} stage that is triggered by the keyboard signal according to the service process and the input prompt information in the i^{th} stage, when i<n, and the input prompt information in the (i+1)^{th} stage corresponding to the input prompt information in the i^{th} stage exists in the service process under the trigger of the keyboard signal.

In an eighth possible implementary manner of the present embodiment,
the signal receiving module 520 further includes:
a signal sending unit 526 configured to, when i<n, and the input prompt information in the (i+1)^{th} stage corresponding to the input prompt information in the i^{th} stage exists in the service process under the trigger of the keyboard signal, and the input prompt information in the i^{th} stage is a second type of prompt information, send the keyboard signal to the automatic voice service system, wherein the second type of prompt information is prompt information used to prompt the user to input personalized information of the user; and
an information receiving unit 527 configured to receive voice prompt information returned by the automatic voice service system after the automatic voice service system validates the keyboard signal.

In a ninth possible implementary manner of the present embodiment, the signal receiving module 520 further includes:
a voice recognition unit 528 configured to recognize the voice prompt information as text prompt information;
a location determination unit 529 configured to determine a location of the current call in the service process according to the text prompt information recognized by the voice recognition unit 528; and
an information obtaining unit 5290 configured to use input prompt information at the determined location as the input prompt information in the (i+1)^{th} stage.

The information display unit 521 is configured to increase i by 1, and perform the step of displaying the input prompt information in the i^{th} stage in the service process again.

In conclusion, in the device for obtaining the voice service provided by the embodiments of the present disclosure, by directly displaying the input prompt information in the service process of the current call on the screen of the terminal, the user may directly input according to the input prompt information displayed on the screen without waiting for playing the whole voice prompt information completely, which avoids the problems in the related art that the user does not know what kind of response signal should be input to continue the query until he or she listens to the whole voice prompt information, which consumes a great deal of waiting time of the user and shortens the battery service life of the terminal, thus the effect that the user may directly input according to the input prompt information displayed on the screen and the waiting time of the user is shorten is achieved. Meanwhile, in the present embodiment, by displaying the input prompt information, the user may directly read the input prompt information without listening to voice prompt, such that the communication may be achieved and it is convenient for people who have weak hearing ability to use.

With respect to the devices in the above embodiments, the specific manners for performing operations for individual modules therein have been described in detail in the embodiments regarding the method for sending information in the voice service, which will not be elaborated herein.

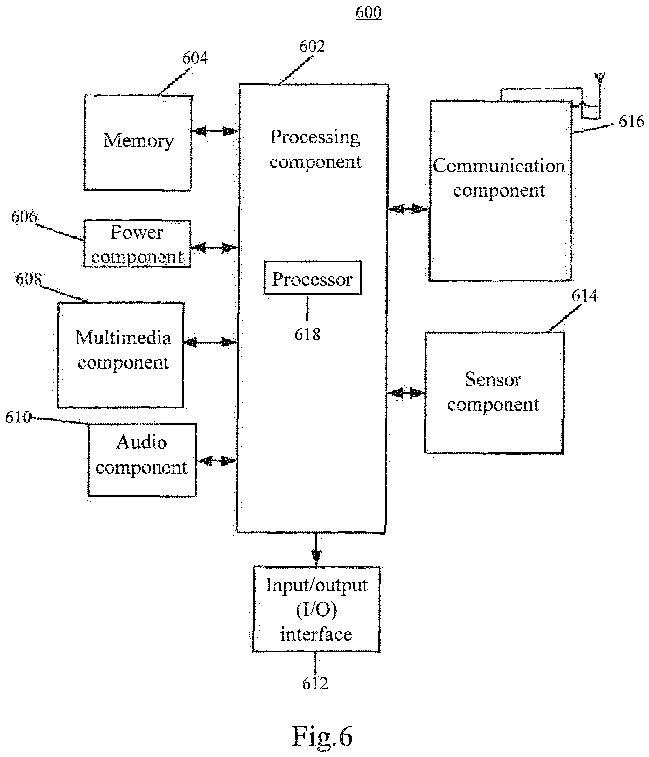

Fig. 6 is a block diagram illustrating a device 600 for obtaining a voice service, according to an exemplary embodiment. For example, the device 600 may be a mobile phone, a computer, a digital broadcast terminal, a messaging device, a gaming console, a tablet, a medical device, exercise equipment, a personal digital assistant and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 usually controls overall operations of the device 600, such as operations associated with display, telephone calls, data communications, camera operations and recording operations. The processing component 602 may include one or more processors 618 to execute instructions to perform all or a part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any application or method operated on the device 600, contact data, phonebook data, messages, pictures, videos, etc. The memory 604 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or optical disk.

The power component 606 provides power to various components of the device 600. The power component 606 may include a power management system, one or more power sources, and other components associated with the generation, management, and distribution of power in the device 600.

The multimedia component 608 includes a screen for providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 608 includes a front camera and/or a rear camera. The front camera and/or the rear camera may receive external multimedia data while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, a button, and the like. The button may include, but not limited to: a home button, a volume button, a starting button and a locking button.

The sensor component 614 includes one or more sensors to provide status assessments of various aspects of the device 600. For instance, the sensor component 614 may detect an open/closed status of the device 600, relative position of components, e.g., the display and the keyboard, of the device 600, a change in position of the device 600 or a component of the device 600, a presence or absence of an user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may further include a light sensor, such as a CMOS or CCD image sensor, for use in imaging applications. In some embodiments, the sensor component 614 may further include an accelerometer sensor, a gyroscope sensor, a magnetic sensor, a pressure sensor, or a temperature sensor.

The communication component 616 is configured to facilitate communication, in a wire or wireless manner, between the device 600 and other devices. The device 600 can access a wireless network based on a communication standard, such as WiFi, 2G or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 600 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is further provided a non-transitory computer readable storage medium including instructions, such as included in the memory 604, executable by the processor 618 in the device 600, for performing the above-described methods. For example, the non-transitory computer-readable storage medium may be a ROM, a random access memory (RAM), a CD-ROM, a magnetic tape, a floppy disc, an optical data storage device and the like.

It should be understood that the present disclosure is not limited to precise structures which are described above and shown in the accompanying drawings, and may be modified and changed without departing from the range of the present disclosure. The scope of the present disclosure is only defined by the appended claims.

## Claims

1. A method for obtaining a voice service, the method comprising:
obtaining (201) a service process corresponding to a service number of a current call, wherein the service process includes input prompt information corresponding to respective stages, and the input prompt information is used to prompt a user to input information; and
after the service number is put through, displaying (202) the input prompt information in the service process, and receiving a keyboard signal that is input by the user for responding to the input prompt information, comprising:
when the service process includes n stages, displaying input prompt information in an i^{th} stage in the service process, wherein n and i are positive integers, and an initial value of i is 1;
receiving a keyboard signal that is input by the user for responding to the input prompt information in the i^{th} stage;
when i<n, and input prompt information in an (i+1)^{th} stage corresponding to the input prompt information in the i^{th} stage exists in the service process under trigger of the keyboard signal, determining the input prompt information in the (i+1)^{th} stage that is triggered by the keyboard signal according to the service process and the input prompt information in the i^{th} stage;
increasing i by 1, and performing the step of displaying the input prompt information in the i^{th} stage in the service process again;
if i<n, and the input prompt information in the (i+1)^{th} stage corresponding to the input prompt information in the i^{th} stage exists in the service process under the trigger of the keyboard signal, and the input prompt information in the i^{th} stage is prompt information used to prompt the user to input personalized information of the user, sending the keyboard signal to an automatic voice service system; and
receiving voice prompt information returned by the automatic voice service system after the automatic voice service system validates the keyboard signal,
**characterized in that**, the displaying the input prompt information in the service process, and receiving the keyboard signal that is input by the user for responding to the input prompt
information further comprises:
recognizing the voice prompt information as text prompt information;
determining a location of the current call in the service process according to the text prompt information, and using input prompt information at the determined location as the input prompt information in the (i+1)^{th} stage; and
increasing i by 1, and performing the step of displaying the input prompt information in the i^{th} stage in the service process again.

2. The method according to claim 1, **characterized in that**, the obtaining the service process corresponding to the service number of the current call comprises:
selecting a service process of the service number of the current call from prestored service processes of respective service numbers;
or,
sending the service number to a server which is used to select a service process corresponding to the service number of the current call from prestored service processes of respective service numbers, and receiving the service process of the service number sent by the server.

3. The method according to claim 2, **characterized in that**, the method further comprises:
receiving a service process of a target service number sent by the server;
detecting whether the prestored service processes of the respective service numbers include the service process of the target service number;
if the prestored service processes of the respective service numbers do not include the service process of the target service number, saving the received service process of the target service number; and
if the prestored service processes of the respective service numbers include the service process of the target service number, using the received service process of the target service number to update the saved service process of the target service number.

4. The method according to claim 1, **characterized in that**, the receiving the keyboard signal that is input by the user for responding to the input prompt information in the i^{th} stage comprises:
receiving a single character input by the user, and using an input signal corresponding to the character as the keyboard signal;
or,
successively receiving respective characters input by the user, and when a predetermined character is received, using an input signal corresponding to the respective characters received before the predetermined character as the keyboard signal;
or,
successively receiving respective characters input by the user, detecting whether a number of the received characters reaches a predetermined number, if the number of the received characters reaches the predetermined number, using an input signal corresponding to the characters of the predetermined number as the keyboard signal.

5. The method according to claim 1 or 4, **characterized in that**, the determining the input prompt information in the (i+1)^{th} stage that is triggered by the keyboard signal according to the service process and the input prompt information in the i^{th} stage comprises:
obtaining a process state machine of the service process, wherein each state in the process state machine is represented by input prompt information corresponding to the state;
determining the input prompt information in the (i+1)^{th} stage that is triggered by the keyboard signal according to the process state machine and the input prompt information in the i^{th} stage.

6. The method according to claim 1, **characterized in that**, the method further comprises:
if the keyboard signal is one of the preset keyboard signals which are prompted to be input by the input prompt information in the i^{th} stage, performing the step of determining the input prompt information in the (i+1)^{th} stage that is triggered by the keyboard signal according to the service process and the input prompt information in the i^{th} stage, when i<n, and the input prompt information in the (i+1)^{th} stage corresponding to the input prompt information in the i^{th} stage exists in the service process under the trigger of the keyboard signal.

7. A device for obtaining a voice service, the device comprising:
a process obtaining module (510) configured to obtain a service process corresponding to a service number of a current call, wherein the service process includes input prompt information corresponding to respective stages, and the input prompt information is used to prompt a user to input information; and
a signal receiving module (520) configured to, after the service number is put through, display the input prompt information in the service process obtained by the process obtaining module, and receive a keyboard signal that is input by the user for responding to the input prompt information, comprising:
an information display unit configured to, when the service process includes n stages, display input prompt information in an i^{th} stage in the service process, wherein n and i are positive integers, and an initial value of i is 1;
a signal receiving unit configured to receive a keyboard signal that is input by the user for responding to the input prompt information in the i^{th} stage displayed by the information display unit;
an information determination unit configured to, when i<n, and input prompt information in an (i+1)^{th} stage corresponding to the input prompt information in the i^{th} stage exists in the service process under trigger of the keyboard signal, determine the input prompt information in the (i+1)^{th} stage that is triggered by the keyboard signal according to the service process and the input prompt information in the i^{th} stage; wherein
the information display unit is configured to increase i by 1, and perform the step of displaying the input prompt information in the i^{th} stage in the service process again;
a signal sending unit configured to, if i<n, and the input prompt information in the (i+1)^{th} stage corresponding to the input prompt information in the i^{th} stage exists in the service process under the trigger of the keyboard signal, and the input prompt information in the i^{th} stage is prompt information used to prompt the user to input personalized information of the user, send the keyboard signal to an automatic voice service system; and
an information receiving unit configured to receive voice prompt information returned by the automatic voice service system after the automatic voice service system validates the keyboard signal,
**characterized in that**, the signal receiving module (520) further comprises:
a voice recognition unit configured to recognize the voice prompt information as text prompt information;
a location determination unit configured to determine a location of the current call in the service process according to the text prompt information, and
an information obtaining unit configured to use input prompt information at the determined location as the input prompt information in the (i+1)^{th} stage, wherein
the information display unit is configured to increase i by 1, and perform the step of displaying the input prompt information in the i^{th} stage in the service process again.

8. The device according to claim 7, **characterized in that**, the process obtaining module comprises:
a first obtaining unit or a second obtaining unit, wherein
the first obtaining unit is configured to select a service process of the service number of the current call from prestored service processes of respective service numbers; and
the second obtaining unit is configured to send the service number to a server which is used to select a service process corresponding to the service number of the current call from prestored service processes of respective service numbers, and receive the service process of the service number sent by the server.

9. The device according to claim 8, **characterized in that**, the device further comprises:
a process receiving module configured to receive a service process of a target service number sent by the server;
a process detection module configured to detect whether the prestored service processes of the respective service numbers include the service process of the target service number;
a process storage module configured to save the received service process of the target service number when a detection result of the process detection module is that the prestored service processes of the respective service numbers do not include the service process of the target service number; and
a process update module configured to use the received service process of the target service number to update the saved service process of the target service number when the detection result of the process detection module is that the prestored service processes of the respective service numbers include the service process of the target service number.

10. A computer program, which when executing on a processor of a device for obtaining a voice service, performs a method for obtaining a voice service according to any one of claims 1-6.

## Patentansprüche

1. Verfahren zum Erlangen eines Sprachdienstes, wobei das Verfahren Folgendes beinhaltet:
Erlangen (201) eines Dienstprozesses entsprechend einer Dienstnummer eines aktuellen Anrufs, wobei der Dienstprozess Eingabeaufforderungsinformationen entsprechend jeweiligen Stufen beinhaltet und die Eingabeaufforderungsinformationen zum Auffordern eines Benutzers zum Eingeben von Informationen benutzt werden; und
Anzeigen (202), nach dem Durchgeben der Dienstnummer, der Eingabeaufforderungsinformationen in dem Dienstprozess und Empfangen eines vom Benutzer zum Antworten auf die Eingabeanforderungsinformationen eingegebenen Tastatursignals, das Folgendes beinhaltet:
Anzeigen, wenn der Dienstprozess n Stufen beinhaltet, von Eingabeaufforderungsinformationen in einer i-ten Stufe in dem Dienstprozess, wobei n und i positive ganze Zahlen sind und ein Anfangswert von i 1 ist;
Empfangen eines Tastatursignals, das vom Benutzer zum Antworten auf die Eingabeaufforderungsinformationen in der i-ten Stufe eingegeben wird;
Bestimmen, wenn i > n ist und Eingabeaufforderungsinformationen in einer (i+1)-ten Stufe entsprechend den Eingabeaufforderungsinformationen in der i-ten Stufe in dem Dienstprozess unter Auslösung des Tastatursignals existieren, der Eingabeaufforderungsinformationen in der durch das Tastatursignal ausgelösten (i+1)-ten Stufe gemäß dem Dienstprozess und den Eingabeaufforderungsinformationen in der i-ten Stufe;
Erhöhen von i um 1 und nochmaliges Ausführen des Schritts des Anzeigens der Eingabeaufforderungsinformationen in der i-ten Stufe in dem Dienstprozess;
Senden, wenn i < n ist und die Eingabeaufforderungsinformationen in der (i+1)-ten Stufe entsprechend den Eingabeaufforderungsinformationen in der i-ten Stufe in dem Dienstprozess unter Auslösung des Tastatursignals existieren und die Eingabeaufforderungsinformationen in der i-ten Stufe Aufforderungsinformationen sind, die zum Auffordern des Benutzers zum Eingeben von personalisierten Informationen des Benutzers benutzt werden, des Tastatursignals zu einem automatischen Sprachdienstsystem; und
Empfangen von von dem automatischen Sprachdienstsystem zurückgegebenen Sprachaufforderungsinformationen nach dem Validieren des Tastatursignals durch das automatische Sprachdienstsystem,
**dadurch gekennzeichnet, dass** das Anzeigen der Eingabeaufforderungsinformationen in dem Dienstprozess und das Empfangen des Tastatursignals, das vom Benutzer zum Antworten auf die Eingabeaufforderungsinformationen eingegeben wird, ferner Folgendes beinhaltet:
Erkennen der Sprachaufforderungsinformationen als Textaufforderungsinformationen;
Bestimmen eines Orts des aktuellen Anrufs in dem Dienstprozess gemäß den Textaufforderungsinformationen und Benutzen der Eingabeaufforderungsinformationen an dem bestimmten Ort als die Eingabeaufforderungsinformationen in der (i+1)-ten Stufe; und
Erhöhen von i um 1 und nochmaliges Ausführen des Schrittes des Anzeigens der Eingabeaufforderungsinformationen in der i-ten Stufe in dem Dienstprozess.

2. Verfahren nach Anspruch 1, **dadurch gekennzeichnet, dass** das Erlangen des Dienstprozesses entsprechend der Dienstnummer des aktuellen Anrufs Folgendes beinhaltet:
Auswählen eines Dienstprozesses der Dienstnummer des aktuellen Anrufs von vorgespeicherten Dienstprozessen von jeweiligen Dienstnummern;
oder
Senden der Dienstnummer zu einem Server, der zum Auswählen eines Dienstprozesses entsprechend der Dienstnummer des aktuellen Anrufs aus vorgespeicherten Dienstprozessen von jeweiligen Dienstnummern und zum Empfangen des Dienstprozesses der von dem Server gesendeten Dienstnummer benutzt wird.

3. Verfahren nach Anspruch 2, **dadurch gekennzeichnet, dass** das Verfahren ferner Folgendes beinhaltet:
Empfangen eines Dienstprozesses einer von dem Server gesendeten Zieldienstnummer;
Erkennen, ob die vorgespeicherten Dienstprozesse der jeweiligen Dienstnummern den Dienstprozess der Zieldienstnummer beinhalten;
Speichern, wenn die vorgespeicherten Dienstprozesse der jeweiligen Dienstnummern den Dienstprozess der Zieldienstnummer nicht enthalten, des empfangenen Dienstprozesses der Zieldienstnummer; und
Benutzen, wenn die vorgespeicherten Dienstprozesse der jeweiligen Dienstnummern den Dienstprozess der Zieldienstnummer enthalten, des empfangenen Dienstprozesses der Zieldienstnummer zum Aktualisieren des gespeicherten Dienstprozesses der Zieldienstnummer.

4. Verfahren nach Anspruch 1, **dadurch gekennzeichnet, dass** das Empfangen des vom Benutzer zum Antworten auf die Eingabeanforderungsinformationen in der i-ten Stufe eingegebene Tastatursignal Folgendes beinhaltet:
Empfangen eines vom Benutzer eingegebenen einzelnen Zeichens und Benutzen eines Eingangssignals entsprechend dem Zeichen als Tastatursignal;
oder
sukzessives Empfangen von jeweiligen vom Benutzer eingegebenen Zeichen und Benutzen, wenn ein vorbestimmtes Zeichen empfangen wird, eines Eingangssignals entsprechend den jeweiligen Zeichen, die vor dem vorbestimmten Zeichen empfangen wurden, als Tastatursignal;
oder
sukzessives Empfangen von jeweiligen vom Benutzer eingegebenen Zeichen, Erkennen, ob eine Anzahl der empfangenen Zeichen eine vorbestimmte Anzahl erreicht, und Benutzen, wenn die Anzahl der empfangenen Zeichen die vorbestimmte Anzahl erreicht, eines Eingangssignals entsprechend den Zeichen der vorbestimmten Nummer als Tastatursignal.

5. Verfahren nach Anspruch 1 oder 4, **dadurch gekennzeichnet, dass** das Bestimmen der Eingabeaufforderungsinformationen in der durch das Tastatursignal ausgelösten (i+1)-ten Stufe gemäß dem Dienstprozess und den Eingabeaufforderungsinformationen in der i-ten Stufe Folgendes beinhaltet:
Erlangen einer Prozessstatusmaschine des Dienstprozesses, wobei jeder Status in der Prozessstatusmaschine durch dem Status entsprechende Eingabeaufforderungsinformationen repräsentiert wird;
Bestimmen der Eingabeaufforderungsinformationen in der durch das Tastatursignal ausgelösten (i+1)-ten Stufe gemäß der Prozessstatusmaschine und den Eingabeaufforderungsinformationen in der i-ten Stufe.

6. Verfahren nach Anspruch 1, **dadurch gekennzeichnet, dass** das Verfahren ferner Folgendes beinhaltet:
Ausführen, wenn das Tastatursignal eines der voreingestellten Tastatursignale ist, zu deren Eingabe die Eingabeaufforderungsinformationen in der i-ten Stufe auffordern, des Schrittes zum Bestimmen der Eingabeaufforderungsinformationen in der durch das Tastatursignal ausgelösten (i+1)-ten Stufe gemäß dem Dienstprozess und den Eingabeaufforderungsinformationen in der i-ten Stufe, wenn i < n ist und die Eingabeaufforderungsinformationen in der (i+1)-ten Stufe entsprechend den Eingabeaufforderungsinformationen in der i-ten Stufe in dem Dienstprozess unter Auslösung des Tastatursignals existieren.

7. Gerät zum Erlangen eines Sprachdienstes, wobei das Gerät Folgendes umfasst:
ein Prozesserlangungsmodul (510), konfiguriert zum Erlangen eines Dienstprozesses entsprechend einer Dienstnummer eines aktuellen Anrufs, wobei der Dienstprozess Eingabeaufforderungsinformationen entsprechend jeweiligen Stufen beinhaltet und die Eingabeaufforderungsinformationen zum Auffordern eines Benutzers zum Eingeben von Informationen benutzt werden; und
ein Signalempfangsmodul (520), konfiguriert zum Anzeigen, nach dem Durchgeben der Dienstnummer, der Eingabeaufforderungsinformationen in dem von dem Prozesserlangungsmodul erlangten Dienstprozess, und Empfangen eines vom Benutzer zum Antworten auf die Eingabeaufforderungsinformationen eingegebenen Tastatursignals, das Folgendes umfasst:
eine Informationsanzeigeeinheit, konfiguriert zum Anzeigen, wenn der Dienstprozess n Stufen beinhaltet, von Eingabeaufforderungsinformationen in einer i-ten Stufe in dem Dienstprozess, wobei n und i positive ganze Zahlen sind und ein Anfangswert von i 1 ist;
eine Signalempfangseinheit, konfiguriert zum Empfangen eines Tastatursignals, das vom Benutzer zum Antworten auf die Eingabeaufforderungsinformation in der durch die Informationsanzeigeeinheit angezeigten i-ten Stufe eingegeben wird;
eine Informationsbestimmungseinheit, konfiguriert zum Bestimmen, wenn i < n ist und die Eingabeaufforderungsinformationen in einer (i+1)-ten Stufe entsprechend den Eingabeaufforderungsinformationen in der i-ten Stufe in dem Dienstprozess unter Auslösung des Tastatursignals existieren, der Eingabeaufforderungsinformationen in der durch das Tastatursignal ausgelösten (i+1)-ten Stufe gemäß dem Dienstprozess und den Eingabeaufforderungsinformationen in der i-ten Stufe; wobei
die Informationsanzeigeeinheit zum Erhöhen von i um 1 und zum nochmaligen Ausführen des Schrittes des Anzeigens der Eingabeaufforderungsinformationen in der i-ten Stufe in dem Dienstprozess konfiguriert ist;
eine Signalsendeeinheit, konfiguriert zum Senden, wenn i < n ist und die Eingabeaufforderungsinformationen in der (i+1)-ten Stufe entsprechend den Eingabeaufforderungen Information in der i-ten Stufe in dem Dienstprozess unter Auslösung des Tastatursignals existieren und die Eingabeaufforderungsinformationen in der i-ten Stufe Aufforderungsinformationen sind, die zum Auffordern des Benutzers zum Eingeben von personalisierten Informationen des Benutzers benutzt werden, des Tastatursignals zu einem automatischen Sprachdienstsystem; und
eine Informationsempfangseinheit, konfiguriert zum Empfangen von vom automatischen Sprachdienstsystem zurückgegebenen Sprachaufforderungsinformationen, nachdem das automatische Sprachdienstsystem das Tastatursignal validiert hat,
**dadurch gekennzeichnet, dass** das Signalempfangsmodul (520) ferner Folgendes umfasst:
eine Spracherkennungseinheit, konfiguriert zum Erkennen der Sprachaufforderungsinformationen als Textaufforderungsinformationen;
eine Ortsbestimmungseinheit, konfiguriert zum Bestimmen eines Orts des aktuellen Anrufs in dem Dienstprozess gemäß den Textaufforderungsinformationen, und
eine Informationserlangungseinheit, konfiguriert zum Benutzen von Eingabeaufforderungsinformationen an dem bestimmten Ort als Eingabeaufforderungsinformationen in der (i+1)-ten Stufe, wobei
die Informationsanzeigeeinheit zum Erhöhen von i um 1 und zum nochmaligen Ausführen des Schrittes des Anzeigens der Eingabeaufforderungsinformationen in der i-ten Stufe in dem Dienstprozess konfiguriert ist.

8. Gerät nach Anspruch 7, **dadurch gekennzeichnet, dass** das Prozesserlangungsmodul Folgendes umfasst:
eine erste Erlangungseinheit oder eine zweite Erlangungseinheit, wobei
die erste Erlangungseinheit zum Auswählen eines Dienstprozesses der Dienstnummer des aktuellen Anrufs von vorgespeicherten Dienstprozessen von jeweiligen Dienstnummern konfiguriert ist; und
die zweite Erlangungseinheit zum Senden der Dienstnummer zu einem Server konfiguriert ist, der zum Auswählen eines Dienstprozesses entsprechend der Dienstnummer des aktuellen Anrufs von vorgespeicherten Dienstprozessen von jeweiligen Dienstnummern und zum Empfangen des Dienstprozesses der vom Server gesendeten Dienstnummern benutzt wird.

9. Gerät nach Anspruch 8, **dadurch gekennzeichnet, dass** das Gerät ferner Folgendes umfasst:
ein Prozessempfangsmodul, konfiguriert zum Empfangen eines Dienstprozesses einer vom Server gesendeten Zieldienstnummer;
ein Prozesserkennungsmodul, konfiguriert zum Erkennen, ob die vorgespeicherten Dienstprozesse der jeweiligen Dienstnummern den Dienstprozess der Zieldienstnummer beinhalten;
ein Prozessspeichermodul, konfiguriert zum Speichern des empfangenen Dienstprozesses der Zieldienstnummer, wenn ein Detektionsergebnis des Prozesserkennungsmoduls ist, dass die vorgespeicherten Dienstprozesse der jeweiligen Dienstnummern den Dienstprozess der Zieldienstnummer nicht beinhalten; und
ein Prozessaktualisierungsmodul, konfiguriert zum Benutzen des empfangenen Dienstprozesses der Zieldienstnummer zum Aktualisieren des gespeicherten Dienstprozesses der Zieldienstnummer, wenn das Detektionsergebnis des Prozesserkennungsmoduls ist, dass die vorgespeicherten Dienstprozesse der jeweiligen Dienstnummern den Dienstprozess der Zieldienstnummer beinhalten.

10. Computerprogramm, das bei Abarbeitung auf einem Prozessor eines Geräts zum Erlangen eines Sprachdienstes ein Verfahren zum Erlangen eines Sprachdienstes nach einem der Ansprüche 1 bis 6 ausführt.

## Revendications

1. Procédé permettant d'obtenir un service vocal, le procédé comprenant :
obtenir (201) un processus de service correspondant à un numéro de service d'un appel courant, où le processus de service comprend une information d'invite d'entrée correspondant à des stades respectifs, et l'information d'invite d'entrée est utilisée pour inviter un utilisateur à entrer une information ; et
après que le numéro de service a été passé, afficher (202) l'information d'invite d'entrée dans le processus de service, et recevoir un signal de clavier qui est entré par l'utilisateur pour répondre à l'information d'invite d'entrée, comprenant :
lorsque le processus de service comprend n stades, afficher l'information d'invite d'entrée dans un i^{e} stade dans le processus de service, où n et i sont des entiers positifs, et une valeur initiale de i est 1 ;
recevoir un signal de clavier qui est entré par l'utilisateur pour répondre à l'information d'invite d'entrée dans le i^{e} stade ;
lorsque i<n, et que l'information d'invite d'entrée dans un (i+1)^{e} stade correspondant à l'information d'invite d'entrée dans le i^{e} stade existe dans le processus de service au déclenchement du signal de clavier, déterminer l'information d'invite d'entrée dans le (i+1)^{e} stade qui est déclenchée par le signal de clavier conformément au processus de service et à l'information d'invite d'entrée dans le i^{e} stade ;
augmenter i de 1, et effectuer de nouveau l'étape consistant à afficher l'information d'invite d'entrée dans le i^{e} stade dans le processus de service ;
si i<n, et que l'information d'invite d'entrée dans le (i+1)^{e} stade correspondant à l'information d'invite d'entrée dans le i^{e} stade existe dans le processus de service au déclenchement du signal de clavier, et que l'information d'invite d'entrée dans le i^{e} stade est une information d'invite utilisée pour inviter l'utilisateur à entrer une information personnalisée de l'utilisateur, envoyer le signal de clavier à un système automatique de service vocal ; et
recevoir une information d'invite vocale renvoyée par le système automatique de service vocal après que le système automatique de service vocal a validé le signal de clavier,
**caractérisé en ce que**, afficher l'information d'invite d'entrée dans le processus de service, et recevoir le signal de clavier qui est entré par l'utilisateur pour répondre à l'information d'invite d'entrée, comprend en outre :
reconnaître l'information d'invite vocale comme une information d'invite en texte ;
déterminer un emplacement de l'appel courant dans le processus de service conformément à l'information d'invite en texte, et utiliser l'information d'invite d'entrée à l'emplacement prédéterminé comme l'information d'invite d'entrée dans le (i+1)^{e} stade ; et
augmenter i de 1, et effectuer de nouveau l'étape consistant à afficher l'information d'invite d'entrée dans le i^{e} stade dans le processus de service.

2. Procédé selon la revendication 1, **caractérisé en ce que**, obtenir le processus de service correspondant au numéro de service de l'appel courant comprend :
sélectionner un processus de service du numéro de service de l'appel courant parmi des processus de service préstockés de numéros de service respectifs ;
ou bien,
envoyer le numéro de service à un serveur qui est utilisé pour sélectionner un processus de service correspondant au numéro de service de l'appel courant parmi des processus de service préstockés de numéros de service respectifs, et recevoir le processus de service du numéro de service envoyé par le serveur.

3. Procédé selon la revendication 2, **caractérisé en ce que**, le procédé comprend en outre :
recevoir un processus de service d'un numéro de service cible envoyé par le serveur ;
détecter si les processus de service préstockés des numéros de service respectifs comprennent le processus de service du numéro de service cible ;
si les processus de service préstockés des numéros de service respectifs ne comprennent pas le processus de service du numéro de service cible, sauvegarder le processus de service reçu du numéro de service cible ; et
si les processus de service préstockés des numéros de service respectifs comprennent le processus de service du numéro de service cible, utiliser le processus de service respectif du numéro de service cible pour actualiser le processus de service sauvegardé du numéro de service cible.

4. Procédé selon la revendication 1, **caractérisé en ce que**, la réception du signal de clavier qui est entré par l'utilisateur pour répondre à l'information d'invite d'entrée dans le i^{e} stade comprend :
recevoir un seul caractère entré par l'utilisateur et utiliser un signal d'entrée correspondant au caractère comme le signal de clavier ;
ou bien,
recevoir successivement des caractères respectifs entrés par l'utilisateur, et lorsqu'un caractère prédéterminé est reçu, utiliser un signal d'entrée correspondant aux caractères respectifs reçus avant le caractère prédéterminé comme le signal de clavier ;
ou bien,
recevoir successivement des caractères respectifs entrés par l'utilisateur, détecter si un nombre des caractères reçus atteint un nombre prédéterminé, si le nombre des caractères reçus atteint le nombre prédéterminé, utiliser un signal d'entrée correspondant aux caractères du nombre prédéterminé comme le signal de clavier.

5. Procédé selon la revendication 1 ou 4, **caractérisé en ce que**, la détermination de l'information d'invite d'entrée dans le (i+1)^{e} stade qui est déclenchée par le signal de clavier conformément au processus de service et à l'information d'invite d'entrée dans le i^{e} stade comprend :
obtenir une machine à états de processus du processus de service, où chaque état dans la machine à états de processus est représenté par l'information d'invite d'entrée correspondant à l'état ;
déterminer l'information d'invite d'entrée dans le (i+1)^{e} stade qui est déclenchée par le signal de clavier conformément à la machine à états de processus et à l'information d'invite d'entrée dans le i^{e} stade.

6. Procédé selon la revendication 1, **caractérisé en ce que**, le procédé comprend en outre :
si le signal de clavier est l'un des signaux de clavier prédéfinis qui sont invités à être entrés par l'information d'invite d'entrée dans le i^{e} stade, effectuer l'étape consistant à déterminer l'information d'invite d'entrée dans le (i+1)^{e} stade qui est déclenchée par le signal de clavier conformément au processus de service et à l'information d'invite d'entrée dans le i^{e} stade, lorsque i<n, et que l'information d'invite d'entrée dans le (i+1)^{e} stade correspondant à l'information d'invite d'entrée dans le i^{e} stade existe dans le processus de service au déclenchement du signal de clavier.

7. Dispositif permettant d'obtenir un service vocal, le dispositif comprenant :
un module d'obtention de processus (510) configuré pour obtenir un processus de service correspondant à un numéro de service d'un appel courant, où le processus de service comprend une information d'invite d'entrée correspondant à des stades respectifs, et l'information d'invite d'entrée est utilisée pour inviter un utilisateur à entrer une information ; et
un module de réception de signal (520) configuré pour, après que le numéro de service a été passé, afficher l'information d'invite d'entrée dans le processus de service obtenu par le module d'obtention de processus, et recevoir un signal de clavier qui est entré par l'utilisateur pour répondre à l'information d'invite d'entrée, comprenant :
une unité d'affichage d'information configurée pour, lorsque le processus de service comprend n stades, afficher l'information d'invite d'entrée dans un i^{e} stade dans le processus de service, où n et i sont des entiers positifs, et une valeur initiale de i est 1 ;
une unité de réception de signal configurée pour recevoir un signal de clavier qui est entré par l'utilisateur pour répondre à l'information d'invite d'entrée dans le i^{e} stade affichée par l'unité d'affichage d'information ;
une unité de détermination d'information configurée pour, lorsque i<n, et que l'information d'invite d'entrée dans un (i+1)^{e} stade correspondant à l'information d'invite d'entrée dans le i^{e} stade existe dans le processus de service au déclenchement du signal de clavier, déterminer l'information d'invite d'entrée dans le (i+1)^{e} stade qui est déclenchée par le signal de clavier conformément au processus de service et à l'information d'invite d'entrée dans le i^{e} stade ; où
l'unité d'affichage d'information est configurée pour augmenter i de 1, et effectuer de nouveau l'étape consistant à afficher l'information d'invite d'entrée dans le i^{e} stade dans le processus de service ;
une unité de transmission de signal configurée pour, si i<n, et que l'information d'invite d'entrée dans le (i+1)^{e} stade correspondant à l'information d'invite d'entrée dans le i^{e} stade existe dans le processus de service au déclenchement du signal de clavier, et que l'information d'invite d'entrée dans le i^{e} stade est une information d'invite utilisée pour inviter l'utilisateur à entrer une information personnalisée de l'utilisateur, envoyer le signal de clavier à un système automatique de service vocal ; et
une unité de réception d'information configurée pour recevoir une information d'invite vocale renvoyée par le système automatique de service vocal après que le système automatique de service vocal a validé le signal de clavier,
**caractérisé en ce que**, le module de réception de signal (520) comprend en outre :
une unité de reconnaissance de voix configurée pour reconnaître l'invite vocale d'information comme une information d'invite en texte ;
une unité de détermination d'emplacement configurée pour déterminer un emplacement de l'appel courant dans le processus de service conformément à l'information d'invite en texte, et
une unité d'obtention d'information configurée pour utiliser l'information d'invite d'entrée à l'emplacement prédéterminé comme l'information d'invite d'entrée dans le (i+1)^{e} stade ; où
l'unité d'affichage d'information est configurée pour augmenter i de 1, et effectuer de nouveau l'étape consistant à afficher l'information d'invite d'entrée dans le i^{e} stade dans le processus de service.

8. Dispositif selon la revendication 7, **caractérisé en ce que**, le module d'obtention de processus comprend :
une première unité d'obtention ou une deuxième unité d'obtention, où
la première unité d'obtention est configurée pour sélectionner un processus de service du numéro de service de l'appel courant parmi des processus de service préstockés de numéros de service respectifs ; et
la deuxième unité d'obtention est configurée pour envoyer le numéro de service à un serveur qui est utilisé pour sélectionner un processus de service correspondant au numéro de service de l'appel courant parmi des processus de service préstockés de numéros de service respectifs, et recevoir le processus de service du numéro de service envoyé par le serveur.

9. Dispositif selon la revendication 8, **caractérisé en ce que**, le dispositif comprend en outre :
un module de réception de processus configuré pour recevoir un processus de service d'un numéro de service cible envoyé par le serveur ;
un module de détection de processus configuré pour détecter si les processus de service préstockés des numéros de service respectifs comprennent le processus de service du numéro de service cible ;
un module de stockage de processus configuré pour sauvegarder le processus de service reçu du numéro de service cible lorsque le résultat d'une détection du module de détection de processus est que les processus de service préstockés des numéros de service respectifs ne comprennent pas le processus de service du numéro de service cible ; et
un module d'actualisation de processus configuré pour utiliser le processus de service reçu du numéro de service cible pour actualiser le processus de service sauvegardé du numéro de service cible lorsque le résultat de la détection du module de détection de processus est que les processus de service préstockés des numéros de service respectifs comprennent le processus de service du numéro de service cible.

10. Programme informatique qui, lorsque exécuté sur un processeur d'un dispositif permettant d'obtenir un service vocal, met en oeuvre un procédé permettant d'obtenir un service vocal selon l'une quelconque des revendications 1-6.
